# EUROPEAN PATENT APPLICATION

(11) **EP 4 629 109 A1**
(43) Date of publication of application: **08.10.2025**
(21) Application number: 24864748.9
(22) Date of filing: 13.09.2024
(51) Int. Cl.: G06F 18/24, G06V 10/30, G06V 10/26, G06N 20/00

(54) **MEAT GRADING METHOD AND SYSTEM**

(30) Priority: 15.09.2023 CN 202311195747
(71) Applicant: NUCTECH COMPANY LIMITED, Beijing 100084 (CN); Tsinghua University, Haidian District, Beijing 100084 (CN)
(72) Inventor: CHEN, Zhiqiang, Beijing 100084 (CN); ZHANG, Li, Beijing 100084 (CN); SUN, Yunda, Beijing 100084 (CN); LI, Xinbin, Beijing 100084 (CN); SHEN, Le, Beijing 100084 (CN); ZHAO, Zhenhua, Beijing 100084 (CN)
(74) Representative: Winter, Brandl - Partnerschaft mbB
(86) International application number: PCT/CN2024/118828
(87) International publication number: WO 2025/056033

(57) **Abstract**

The present disclosure provides a meat grading method and a meat grading system. The method includes: acquiring a multi-dimensional meat imaging information of a meat piece; performing a high-precision measurement on the meat piece to acquire grading true value data of the meat piece; calculating a grading indicator parameter calculation value based on the multi-dimensional meat imaging information, and training a grading indicator parameter model based on the grading indicator parameter calculation value and the grading true value data to acquire a trained grading indicator parameter model.

## Description

The present disclosure claims priority to Chinese Patent Application No. 202311195747.2, filed on September 15, 2023, the entire contents of which are incorporated herein by reference.

### TECHNICAL FIELD

The present disclosure relates to the field of detection technology, specifically, to a meat grading method and a meat grading system, and in particular to a meat grading method and a meat grading system based on model training.

### BACKGROUND

In the production and processing of pork, mutton, beef and other meats, meat undergoes grading and processing treatments. The former determines the grade of the meat carcass through various indicator parameters of the meat carcass, so as to settle accounts with upstream suppliers. The latter involves cutting the meat carcass into different parts or areas, so as to sell them according to values. For manufacturers, the higher the accuracy of the grading process of meat pieces, the better the economic benefits acquired. Therefore, the pursuit of new technologies to improve the grading level is a consistent and long-term goal for manufacturers. Taking pork as an example, in the relevant grading process, it is required to grade the pork carcass through the measurement of the back fat thickness of the pork carcass combined with a result of human eye observation. This requires highly skilled workers, resulting in high labor costs of the manufacturers. Moreover, the grading results may be affected by the differences in personal experience and performance level of the workers. As a result, the stability and the consistency of grading results at different times cannot be guaranteed.

In general, relevant meat grading process exhibits a lot of problems of excessive reliance on manual operations. On the one hand, it is necessary to pay relatively high labor costs, and on the other hand, it is difficult to guarantee the accuracy, the stability and the consistency of the grading process.

### SUMMARY

According to an aspect of the present disclosure, a meat grading method is provided, including: acquiring a multi-dimensional meat imaging information of a meat piece; performing a high-precision measurement on the meat piece to acquire grading true value data of the meat piece; and calculating a grading indicator parameter calculation value based on the multi-dimensional meat imaging information, and training a grading indicator parameter model based on the grading indicator parameter calculation value and the grading true value data, so as to acquire a trained grading indicator parameter model.

In the embodiments, the meat piece is graded based on a grading indicator parameter calculation value calculated by the trained grading indicator parameter model.

In the embodiments, the grading indicator parameter calculation value includes at least a morphological and structural information and a composition information of the entire meat piece, and a morphological and structural information and a composition information of at least one part of the meat piece, and the method further includes: grading the meat piece based on the morphological and structural information and the composition information required for grading with reference to a grading standard.

In the embodiments, the grading indicator parameter calculation value includes a segmentation information of at least one part of the meat piece and a position information of at least one part of the meat piece.

In the embodiments, the morphological and structural information includes: at least one of a shape information, a length information, a width information, a thickness information or a weight information of the entire meat piece, and at least one of a shape information, a length information, a width information, a thickness information or a weight information of each of at least one part of the meat piece; and the composition information includes: at least one of a mass percentage, a lean meat rate or a fat rate of the entire meat piece, and at least one of a mass percentage, a lean meat rate or a fat rate of each of at least one part.

In the embodiments, training the grading indicator parameter model includes: calculating a difference between the grading indicator parameter calculation value and the grading true value data, and training the grading indicator parameter model by comparing the difference with a corresponding reference data.

In the embodiments, training the grading indicator parameter model further includes: when the difference is greater than the reference data, updating model parameters of the grading indicator parameter model to recalculate the grading indicator parameter calculation value, comparing the difference between the recalculated grading indicator parameter calculation value and the grading true value data with the reference data, and repeating calculation and comparison until the difference is less than or equal to the reference data.

In the embodiments, calculating the grading indicator parameter calculation value includes: performing, by the grading indicator parameter model, image processing on the meat imaging information to segment the meat imaging information, and calculating, by the grading indicator parameter model, the grading indicator parameter calculation value based on the segmented meat imaging information.

In the embodiments, calculating the grading indicator parameter calculation value includes: receiving, by the grading indicator parameter model, a meat imaging information which is segmented by image processing, and calculating, by the grading indicator parameter model, the grading indicator parameter calculation value based on the segmented meat imaging information.

In the embodiments, the image processing includes at least one of image segmentation and positioning processing, image noise reduction processing, or image enhancement processing.

In the embodiments, an image segmentation and positioning model is trained using the meat imaging information and a part of the grading truth data, and a part of the grading indicator parameter calculation value is provided based on the meat imaging information using an output of the trained image segmentation and positioning model.

In the embodiments, the high-precision measurement includes: acquiring the grading truth data of the meat piece using a high-precision imaging device; and/or segmenting the meat piece to acquire at least one part of the meat piece, and measuring the at least one part independently to acquire the grading truth data of the meat piece.

According to another aspect of the present disclosure, a meat grading system is provided. The meat grading system is configured to perform the meat grading method according to the aspect of the present disclosure. the system includes a meat imaging detection device configured to acquire the multi-dimensional meat imaging information of the meat piece; a true value data acquisition device configured to acquire the grading true value data of the meat piece; and the grading indicator parameter model configured to: calculate the grading indicator parameter calculation value based on the multi-dimensional meat imaging information, and be trained based on the grading indicator parameter calculation value and the grading true value data to acquire the trained grading indicator parameter model.

In the embodiments, the trained grading indicator parameter model grades the meat piece based on the grading indicator parameter calculation value calculated by the trained grading indicator parameter model.

In the embodiments, the meat grading system further including an image segmentation and positioning model, where the image segmentation and positioning model is trained based on the meat imaging information and a part of the grading truth data, and an output provided by the trained image segmentation and positioning model based on the meat imaging information is used as a part of the grading indicator parameter calculation value.

In the embodiments, the grading true value data acquisition device includes: a manual measurement device configured to segment the meat piece and directly measure at least one segmented part to acquire the grading true value data; and/or a high-precision imaging device configured to acquire a high-precision imaging information of the meat piece at a resolution higher than a resolution of the meat imaging detection device, so as to acquire the grading true value data therefrom.

It should be understood that the content described in this section is not intended to identify key or important features of the embodiments of the present disclosure, nor is it intended to limit the scope of the present disclosure. Other features of the present disclosure will become intelligible from the following description.

### BRIEF DESCRIPTION OF THE DRAWINGS

The accompanying drawings are used to better understand the present disclosure and do not constitute a limitation of the present disclosure.
FIG. 1 illustrates a meat grading system according to an embodiment of the present disclosure.
FIG. 2 shows an example of a grading indicator parameter calculation value according to an embodiment of the present disclosure.
FIG. 3 shows a flowchart of training a grading indicator parameter model according to an embodiment of the present disclosure.
FIG. 4 shows a flowchart of training a grading indicator parameter model according to another embodiment of the present disclosure.
FIG. 5 shows a schematic diagram of segmenting parts in a meat imaging information according to an embodiment of the present disclosure.

### DETAILED DESCRIPTION OF EMBODIMENTS

To better explain the objectives, technical solutions and advantages of the present disclosure, embodiments of the present disclosure will be described in detail below with reference to the accompanying drawings. It should be understood that the following descriptions of the embodiments is intended to explain and illustrate the general concept of the present disclosure, but should not be construed as limiting the present disclosure. In the specification and drawings, the same or similar reference numerals indicate the same or similar components. For the sake of clarity, the drawings are not necessarily drawn to scale, and some well-known components and structures may be omitted from the drawings.

Unless otherwise defined, technical or scientific terms used in the present disclosure should have the common meanings understood by those of ordinary skill in the field to which the present disclosure belongs. The terms "first", "second" and the like used in the present disclosure do not indicate any order, quantity or importance, but are only used to distinguish different components. The wording "a" or "an" does not exclude a plurality. The words "include", "comprise" or the like mean that the elements or objects preceding the word include the elements or objects listed after the word and their equivalents, but do not exclude other elements or objects. The terms "connection", "connected to" or the like are not limited to a physical or mechanical connection, but may include an electrical connection, whether direct or indirect. The terms "up", "down", "left", "right", "top", "bottom" or the like are only used to indicate relative positional relationships. When the absolute position of the described object changes, the relative positional relationship may change accordingly. When an element such as a layer, a film, a region or a substrate is described as being located "on" or "under" another element, the element may be "directly" located "on" or "under" the other element, or there may be an intermediate element.

The purpose of the present disclosure is to propose a meat grading method and a meat grading system, which effectively improves the accuracy of the meat grading process by training a corresponding model based on meat grading requirements, thereby reducing the losses of meat manufacturers and improving economic benefits.

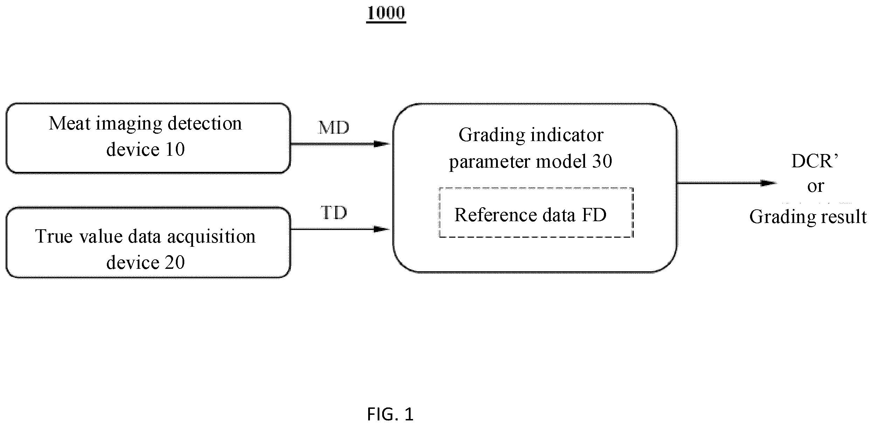

FIG. 1 shows a meat grading system 1000 according to the embodiments of the present disclosure. As shown in FIG. 1, the meat grading system 1000 may include a meat imaging detection device 10, a true value data acquisition device 20, and a grading indicator parameter model 30.

As shown in FIG. 1, the meat imaging detection device 10 may be configured to detect a meat piece to acquire a multi-dimensional meat imaging information MD of the meat piece. In the present disclosure, the term "meat imaging information" may refer to a multi-dimensional (e.g., three-dimensional) image of meat, and the tissue composition and part area information included in the image. According to the embodiments of the present disclosure, compared with the traditional manual grading and processing, by using the meat imaging detection device 10 as an automated imaging detection means, the surface and internal information of the meat may be more comprehensively and deeply mined. In addition, in the acquired meat imaging information MD, different tissue components such as bones, fat and lean meat in the meat, as well as different parts and areas of the front tip segment, middle segment (including ribs) and rear tip segment may be clearly seen, and most of this image information cannot be observed by the human eye.

As an example, the meat imaging detection device 10 may include any one of an X-ray imaging device, a visible light imaging device, an infrared imaging device and an ultrasonic imaging device, and any combination thereof. By way of example, the meat imaging information MD may include any one of a computer tomography (CT) image, a digital radiography (DR) image and the like. However, the embodiments of the present disclosure are not limited thereto.

In this way, by using meat imaging detection means to acquire the meat imaging information MD as the basis for calculating processing parameters, in addition to ensuring the calculation accuracy and the processing accuracy, the use of meat imaging detection means may also acquire a richer and more multi-dimensional image information than human eye observation. For example, X-ray CT imaging may acquire an information of the material and the structure inside the meat, which is unable to be directly observed by the human eye. As such, more information is provided for the meat grading and processing, which is conducive to promoting the accuracy thereof.

As shown in FIG. 1, the true value data acquisition device 20 may be configured to perform a high-precision measurement on the meat piece to acquire grading true value data TD of the meat piece. In the present disclosure, the "grading truth data" may refer to data that enables a device with a grading function to achieve grading of a meat piece at a required accuracy. That is, when the grading truth data is used, a desired grading result may be acquired. Therefore, according to the embodiments of the present disclosure, the "grading truth data" may be used as reference data for training the grading indicator parameter model 30, and may be data of the same type as the grading indicator parameter calculation value that is calculated by the grading indicator parameter model 30. In other words, the grading indicator parameter model 30 may be trained with reference to the grading truth data TD, so that the grading indicator parameter calculation value calculated by the trained grading indicator parameter model 30 may have the same accuracy and reliability as the grading truth data TD.

As an example, acquiring the grading truth data TD may include segmenting the meat piece to obtain at least one part of the meat piece, and separately measuring the at least one part to acquire the grading truth data TD of the meat piece. In this case, the truth data acquisition device 20 may include a manual measurement device. The manual measurement device may be used to segment the meat piece and directly measure at least one segmented part to acquire the grading truth data TD. For example, an experienced meat processor may first cut one or more parts of the meat piece through a specific manual measurement device, and then directly measure each part one by one. For example, in this way, a morphological and structural information such as a length information and a width information of the entire meat piece may be measured. For another example, a proportion information of the cut parts, such as a lean meat rate, etc., may be measured. In this way, through the manual direct measurement, an accurate and reliable measurement result may be acquired as the grading truth data TD, which may be used in the subsequent training process.

As another example, the true value data acquisition device 20 may include a high-precision imaging device. The high-precision imaging device may be a device having a resolution higher than the meat imaging detection device 10. For example, compared to the meat imaging detection device 10, the high-precision imaging device may have higher performance indicators, such as the spatial resolution, the material resolution, etc. In this way, after the high-precision imaging information is acquired, the difficulty of segmenting and positioning the image is reduced, resulting in higher accuracy, so that more accurate segmentation and positioning data may be acquired as the true value data. As an example, the high-precision imaging device may include a high-performance medical CT device. In addition, as an example, processing of the high-precision imaging information may include automatic calculation processing (e.g., using a threshold segmentation algorithm), or manual or semi-automatic image processing, etc.

As another example, the true value data acquisition device 20 may further include an image processing device. In some cases, the resolution of the meat imaging information MD acquired by the meat imaging detection device 10 may be sufficient. In this case, the image processing device may be used to perform image processing, such as automatic processing, semi-automatic processing or manual processing, on the meat imaging information MD, so as to acquire a part segmentation information and a position information. Then, based on this information, the morphological and structural information of the meat piece, such as the length information, the width information, etc., may be calculated manually by a technician or automatically by a computing device. In this way, accurate data may be acquired as grading truth data TD for the subsequent training process. As an example, the image processing device may be a trained image segmentation and positioning model.

It should be noted that the above-mentioned true value data acquisition device 20 is only an example, and the true value data acquisition device in the present disclosure may include any relevant device, as long as the device is capable of acquiring reference data for training the grading indicator parameter model 30.

According to the embodiments of the present disclosure, as shown in FIG. 1, the grading indicator parameter model 30 may receive the meat imaging information MD and the true value data TD from the meat imaging detection device 10 and the true value data acquisition device 20, respectively. The grading indicator parameter model 30 may calculate the grading indicator parameter calculation value DCR for grading the meat piece based on the multi-dimensional meat imaging information MD, and the grading indicator parameter model 30 is trained based on the grading indicator parameter calculation value DCR and the grading true value data TD, so as to obtain the trained grading indicator parameter model 30.

Thereafter, the trained grading indicator parameter model 30 may be used to perform automated grading operations on batches of meat pieces. That is, the trained grading indicator parameter model 30 may be used to calculate the grading indicator parameter calculation value DCR based on the meat imaging information MD of each of meat pieces to be graded, and the meat pieces may be graded based on the calculated grading indicator parameter calculation value DCR of each meat piece.

As shown in FIG. 1, as an example, the trained grading indicator parameter model 30 may be configured to have a grading function. For example, the trained grading indicator parameter model 30 may be provided with a grading unit therein. A grading standard reference table may be stored in the grading unit. After the grading indicator parameter calculation value DCR' of the meat piece is calculated by the trained grading indicator parameter model 30, the grading unit in the trained grading indicator parameter model 30 may compare the calculated grading indicator parameter calculation value DCR' with the stored grading standard reference table, thereby determining the grading result and outputting the grading result to the relevant inspection personnel to complete the grading operation of a single meat piece.

Alternatively, as another example, the trained grading indicator parameter model 30 may not have a grading function, and the grading operation may be completed by other devices outside the trained grading indicator parameter model 30. In this case, after the trained grading indicator parameter model 30 calculates the grading indicator parameter calculation value DCR', it may be directly output to other devices outside, and the meat grading process may be completed by other devices. Similar to the above, the other devices may store a grading standard reference table therein, and a grading result may be output after comparison. As an example, the other devices may be a remote computer storing a grading function program, etc. However, the embodiments of the present disclosure are not limited thereto. In addition, the embodiments of the present disclosure are not limited to the above-mentioned grading implementation method, and any suitable grading method based on indicator parameters may be employed.

According to the embodiments of the present disclosure, the trained grading indicator parameter model 30 calculates the grading indicator parameter calculation value DCR' based on the multi-dimensional meat imaging information MD. Since the multi-dimensional meat imaging information MD is in a form of an image, the meat imaging information MD may include the following information, for example: a coordinate information of a specific point on or inside a contour edge of the meat multi-dimensional image; tissue distribution in the image (e.g., distribution of lean meat, fat meat, bones, etc.); regional distribution of the meat piece (e.g., a front tip section, a middle section, a rear tip section, a head, a back, etc. of the meat piece). In this case, the trained grading indicator parameter model 30 may be configured to acquire the above information from the meat imaging information MD, and calculate the information to acquire the grading indicator parameter calculation value DCR'.

The grading indicator parameter calculation value DCR' may include information related to the entire meat piece. As an example, the grading indicator parameter calculation value DCR' may include a morphological and structural information and a composition information of the entire meat piece.

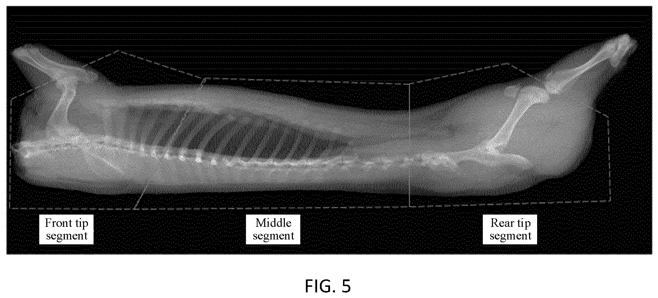

The grading indicator parameter calculation value DCR' may further include an information related to a part of the meat piece. Generally, the grading of meat pieces requires not only reference to an indicator of the entire meat piece, but also reference to the indicators of a plurality of parts of the meat piece. As described above, the meat imaging information MD may show different parts and areas of the meat piece, thus after performing specific image processing on the meat imaging information MD, a region segmentation and a part segmentation may be implemented in the meat imaging information MD, thereby acquiring the segmentation information and position information about the parts. Therefore, as an example, the grading indicator parameter calculation value DCR' may include the segmentation information of at least one part of the meat piece and the position information of at least one part. For example, the part may be at least one of a front tip section, a middle section, a rear tip section, a front chest, a back hip, a rib area, a tenderloin area, a fat area, a lean area, a bone area, etc. of the meat piece. As shown in FIG. 5, FIG. 5 shows the segmentation information of the front tip segment, the middle segment and the back tip in the DR image of the meat piece. However, the embodiments of the present disclosure are not limited thereto.

In the present disclosure, the "segmentation information" may indicate a part segmentation status of the meat piece, that is, indicating which parts are segmented from the meat piece to be graded, which may permit the grading indicator parameter calculation value DCR' to include a parameter information of the segmented parts. In the present disclosure, the "position information" may indicate a coordinate information of the segmented parts. Further, the grading indicator parameter calculation value DCR' may further include a morphological and structural information and a composition information of each part of at least one part of the meat piece.

As an example, the morphological and structural information may include at least one of a shape information, a length information, a width information, a thickness information or a weight information of the entire meat piece and at least one of a shape information, a length information, a width information, a thickness information or a weight information of each part. As an example, the composition information may include at least one of a mass percentage, a lean meat rate or a fat rate of the entire meat piece and at least one of a mass percentage, a lean meat rate or a fat rate of each part. As described above, the multi-dimensional meat imaging information MD may include the distribution of different tissues, so that the trained grading indicator parameter model 30 may calculate a proportion of each tissue in the meat piece, thereby acquiring parameter indicators such as a mass percentage, a lean meat rate or a fat rate. In addition, the multi-dimensional meat imaging information MD may include a coordinate information of a specific point, so that the trained grading indicator parameter model 30 may calculate parameter indicators such as the length, the height and the thickness of the meat piece. Further, in the meat imaging information MD after the part segment, for the segmented parts, the trained grading indicator parameter model 30 may calculate the morphological and structural information (such as the length, the height, the thickness, etc.) and the composition information (such as the mass percentage, the lean meat rate, the fat rate, etc.) for each part in a similar manner as described above.

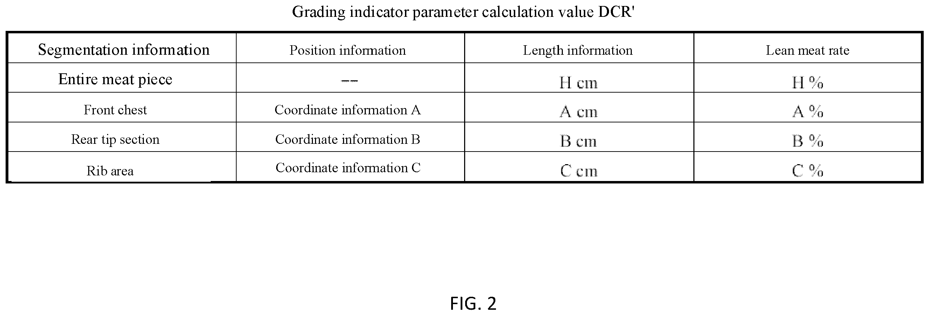

FIG. 2 shows an example of a grading indicator parameter calculation value DCR' according to an embodiment of the present disclosure. For ease of explanation, only the front chest, the rear hip, and the rib area are shown as examples of the segmented parts, only the length information is shown as an example of morphological and structural information, and the lean meat rate as an example of composition information is shown. However, this is only an example, and the present disclosure may include other grading indicator parameters.

As shown in FIG. 2, the grading indicator parameter calculation value DCR' may include the entire meat piece and three parts thereof (i.e., the front chest, the rear hip, and the rib areas), as well as the coordinate information, the length information and the lean meat rate information corresponding to the entire meat piece and each part, respectively. In this case, based on the calculated grading indicator parameter calculation value DCR', with reference to a grading standard, the grade of the corresponding meat piece may be determined, thereby completing the grading operation. For example, the grading standard may be the grading standard reference table as described above. In the reference table, for example, each grade and a numerical range of the indicator parameter corresponding to each grade may be listed. Thus, the grade may be determined based on the parameter value included in the grading indicator parameter calculation value DCR'.

According to the embodiments of the present disclosure, the training of the grading indicator parameter model 30 may include calculating a difference between the grading indicator parameter calculation value DCR and the grading true value data TD, and training the grading indicator parameter model 30 by comparing the difference with a corresponding reference data FD. Further, when the difference is greater than the reference data FD, model parameters of the grading indicator parameter model 30 are updated to recalculate the grading indicator parameter calculation value DCR. The difference between the recalculated grading indicator parameter calculation value DCR and the grading true value data TD is compared with the reference data FD, and calculation and comparison are repeated until the difference is less than or equal to the reference data FD.

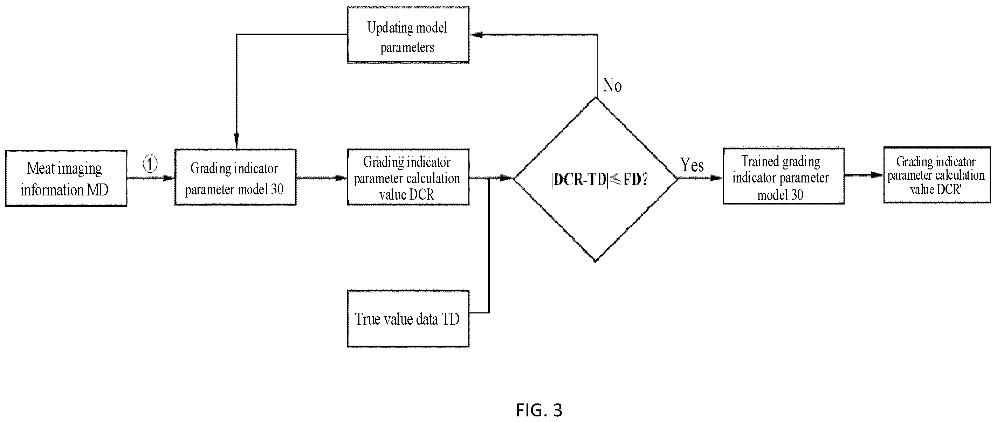

FIG. 3 shows a flowchart of training a grading indicator parameter model 30 according to an embodiment of the present disclosure. As shown in FIG. 3, the grading indicator parameter model 30 may calculate the grading indicator parameter calculation value DCR for the first time based on the meat imaging information MD. At this time, the grading indicator parameter model 30 is an untrained model, thus the grading indicator parameter calculation value DCR calculated for the first time cannot meet the expected effect (such as the accuracy). In this case, it is necessary to iteratively train the grading indicator parameter model 30 based on the true value data, and by modifying the model parameters of the grading indicator parameter model 30 in each iteration, the calculated result may be gradually approached to the true value data. Finally, the model parameters of the grading indicator parameter model 30 may be adjusted to enable the calculation of the expected grading indicator parameter calculation value DCR' based on the meat imaging information MD, so as to be used in subsequent grading processes.

Therefore, as shown in FIG. 3, the grading indicator parameter model 30 may calculate the difference between the grading indicator parameter calculation value DCR calculated for the first time and the grading true value data TD (expressed as |DCR- TD| in FIG. 3), and then compare the difference with the reference data FD to determine whether the difference is less than or equal to the reference data FD (expressed as |DCR-TD|≤FD? in FIG. 3). When the difference is not less than or equal to (i.e., greater than) the reference data FD ("No" in FIG. 3), the grading indicator parameter model 30 may update the model parameters and use the updated grading indicator parameter model 30 to recalculate the grading indicator parameter calculation value DCR (i.e., for the second time). Then, a difference between the recalculated grading indicator parameter calculation value DCR and the grading true value data TD is calculated, and the above-mentioned comparison process is repeated. That is, the second difference is compared with the reference data FD to determine whether the difference is less than or equal to the reference data FD. When the difference is still not less than or equal to (i.e., greater than) the reference data FD ("No" in FIG2), the parameter updating process and the calculation process mentioned above are repeated until the difference is less than or equal to the reference data FD. When the second difference is less than or equal to the reference data FD ("Yes" in FIG. 2), it may be determined that the training of the grading indicator parameter model 30 is completed, and the grading indicator parameter model 30 at this time is determined as the trained grading indicator parameter model 30.

In this way, a model capable of calculating a plurality of grading indicator parameters of meat may be acquired, and after the model is trained, an output result with an accuracy close to the true value data may be acquired. Therefore, the meat grading system 1000 according to the embodiments of the present disclosure may automatically calculate a plurality of grading indicator parameter calculation values of meat pieces with high accuracy, so that the meat may be graded and rated in subsequent processes.

After the trained grading indicator parameter model 30 is obtained, the batch grading process of meat pieces may be started. That is, for a batch of meat pieces, it is only necessary to use the ordinary meat imaging detection device 10 to acquire the meat imaging information MD of each meat piece one by one. The trained grading indicator parameter model 30 may receive a meat imaging information MD of each meat piece, and calculate and output the grading indicator parameter calculation value DCR' of each meat piece, or directly output a grade thereof (i.e., a grading result). In this way, after acquiring the trained grading indicator parameter model 30, the grading process for batches of meat pieces may be completed quickly, efficiently and accurately, cost-effectiveness may be increased, and customer satisfaction may be improved.

As an example, the grading indicator parameter model 30 may be a machine learning model including a neural network. By employing a model training approach, the model may also be trained for different multiple indicator parameters according to different user needs, so as to ensure the output accuracy of the targeted indicator parameters. For example, the above purpose may be achieved by modifying the data items included in the grading truth data TD. However, the embodiments of the present disclosure are not limited thereto. In this way, the meat grading system 1000 according to the embodiments of the present disclosure has high flexibility and may be applied to various types of meat factories.

Further, the training process of the grading indicator parameter model 30 may include training the model with a large amount of sample data. As an example, during the training of the grading indicator parameter model 30, a large amount of meat pieces may be used, where the grading indicator parameter model 30 may be trained for a plurality of times by acquiring true value data TD of the respective meat pieces one by one. In this way, the accuracy of the grading indicator parameter model 30 may be effectively improved, thereby minimizing the calculation deviation caused by occasional problems of the model and improving the reliability of the model application.

As shown in FIG. 3, regarding process ①, i.e., a process of calculating the grading indicator parameter calculation value DCR by the grading indicator parameter model 30, for example, this process may include that the grading indicator parameter model 30 performs image processing on the meat imaging information MD to segment the meat imaging information MD, and calculates the grading indicator parameter calculation value DCR based on the segmented meat imaging information MD. In this example, the grading indicator parameter model 30 may be configured to have an image processing function. For example, the grading indicator parameter model 30 may include an image processing unit. In this case, the meat imaging information MD may be directly sent to the grading indicator parameter model 30. In the grading indicator parameter model 30, first, the image processing unit performs specific image processing on the meat imaging information MD. As described above, it is necessary to perform part segmentation and positioning on the multi-dimensional image of the meat imaging information MD. Therefore, the image processing unit may perform part segmentation on the meat imaging information MD to divide at least one part and a position information (for example, a three-dimensional coordinate information) corresponding to each part. Thus, in the subsequent calculation process, the grading indicator parameter model 30 may calculate the grading indicator parameter calculation value DCR of the at least one part based on the meat imaging information MD on which image processing (i.e., the part segmentation) is performed.

Alternatively, as another example, the grading indicator parameter model 30 may not include the above-mentioned image processing unit, that is, it does not have an image processing function. Instead, in process ①, the meat imaging information MD may be sent to an external image processing device, and the image processing device performs specific image processing similar to the above-mentioned image processing, thereby acquiring the segmented meat imaging information MD. Thereafter, the grading indicator parameter model 30 calculates the grading indicator parameter calculation value DCR based on the segmented meat imaging information MD.

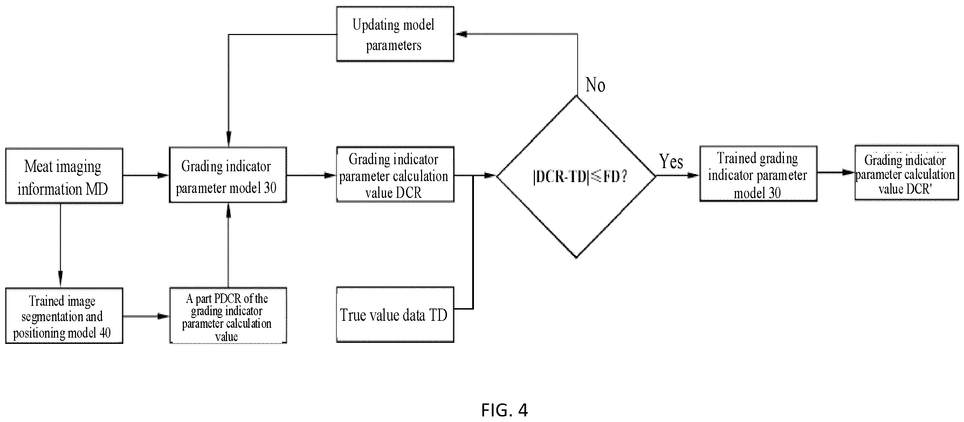

FIG. 4 shows a flowchart of training a grading indicator parameter model 30 according to another embodiment of the present disclosure. As shown in FIG. 4, the meat grading system 1000 may further include an image segmentation and positioning model 40. According to the embodiments of the present disclosure, the image segmentation and positioning model 40 may be trained using the meat imaging information MD and a part of the grading truth data TD. Then, a part PDCR of the grading indicator parameter calculation value DCR is provided based on the meat imaging information MD using an output of the trained image segmentation and positioning model 40.

As an example, the image segmentation and positioning model 40 may be a model for acquiring segmentation information and position information of parts or tissues of a meat multi-dimensional image. That is, the image segmentation and positioning model 40 may be interpreted as a model for performing an image processing process similar to those described above on the meat imaging information MD, and thereby acquiring the part segmentation information and the position information of the image. According to the embodiments of the present disclosure, the image segmentation and positioning model 40 may be trained based on the meat imaging information MD and the grading truth data TD, and may have a training process similar to the training process of the grading indicator parameter model 30 described above. The difference between the two is that the training of the image segmentation and positioning model 40 is only performed based on the part of the grading truth data TD corresponding to the image segmentation information. Thus, the trained image segmentation and positioning model 40 may be obtained.

In this case, the trained image segmentation and positioning model 40 may acquire a calculation result based on the meat imaging information MD as the output of the trained image segmentation and positioning model 40. The output (i.e., the acquired calculation result) may be a part PDCR of the grading indicator parameter calculation value DCR. As an example, the part PDCR may include the segmentation information of at least one part of the meat piece and the position information of the at least one part, as described above with reference to FIG. 2. Then, as shown in FIG. 4, the trained image segmentation and positioning model 40 may output the calculated part PDCR of the grading indicator parameter calculation value to the grading indicator parameter model 30, for use by the grading indicator parameter model 30.

As an example, the grading indicator parameter model 30 may further calculate a remaining part of the grading indicator parameter calculation value DCR based on the part PDCR of the grading indicator parameter calculation value and the meat imaging information MD, and then output the part PDCR and the remaining part together as the output of the grading indicator parameter calculation value DCR. Alternatively, as another example, the partial PDCR may not be involved in the calculation of the remaining part. That is, the grading indicator parameter model 30 may calculate the remaining part of the grading indicator parameter calculation value DCR based only on the meat imaging information MD, and then output it together with the part PDCR received from the trained image segmentation and positioning model 40 as the output of the grading indicator parameter calculation value DCR.

It should be understood that the calculation of the grading indicator parameter calculation value DCR' of the trained grading indicator parameter model 30 may also include the above-mentioned image processing process or the training and calculation process of the image segmentation and positioning model 40, and may be performed in a similar way to the above. As an example, the image processing of the meat imaging information MD may include at least one of image segmentation and positioning processing, image noise reduction processing, and image enhancement processing. However, the embodiments of the present disclosure are not limited thereto.

Advantageously, by using the trained grading indicator parameter model, it is possible for the meat grading system 1000 described in the various embodiments of the present disclosure to automatically perform grading operations on batches of meat pieces at high accuracy, thereby improving the efficiency of meat grading, reducing economic losses of customers, and improving customer satisfaction. In addition, the meat grading system may overcome the technical problem in the related art that a large amount of reliance on workers' personal experience may lead to significant differences over different time periods, which may cause grading deviations and thus cause economic losses to meat factories.

Moreover, the meat grading system 1000 described in the various embodiments of the present disclosure abandons the traditional human eye observation method, so that the grading accuracy, the stability and the consistency thereof may be greatly improved and enhanced, and the labor cost of hiring workers may be saved, thereby effectively improving the economic benefits of meat manufacturers.

It will be understood that various forms of the processes shown above may be used, with steps reordered, added or deleted. For example, the steps described in the present disclosure may be performed in parallel, sequentially, or in different orders, as long as the expected results of the technical solutions disclosed in the present disclosure may be achieved, which is not limited in the present disclosure.

The above specific implementations do not constitute limitations on the scope of protection of the present disclosure. It will be understood by those skilled in the art that various modifications, combinations, sub-combinations and substitutions may be made depending on design requirements and other factors. Any modifications, equivalent substitutions and improvements made within the spirit and principles of the present disclosure should be included in the scope of protection of the present disclosure.

## Claims

1. A meat grading method, comprising:
acquiring a multi-dimensional meat imaging information of a meat piece;
performing a high-precision measurement on the meat piece to acquire grading true value data of the meat piece; and
calculating a grading indicator parameter calculation value based on the multi-dimensional meat imaging information, and training a grading indicator parameter model based on the grading indicator parameter calculation value and the grading true value data, so as to acquire a trained grading indicator parameter model.

2. The method according to claim 1, further comprising:
grading the meat piece based on a grading indicator parameter calculation value calculated by the trained grading indicator parameter model.

3. The method according to claim 2, wherein the grading indicator parameter calculation value comprises at least a morphological and structural information and a composition information of the entire meat piece, and a morphological and structural information and a composition information of at least one part of the meat piece, and
the method further comprises: grading the meat piece based on the morphological and structural information and the composition information required for grading with reference to a grading standard.

4. The method according to claim 3, wherein the grading indicator parameter calculation value comprises a segmentation information of at least one part of the meat piece and a position information of at least one part of the meat piece.

5. The method according to claim 4, wherein
the morphological and structural information comprises: at least one of a shape information, a length information, a width information, a thickness information or a weight information of the entire meat piece, and at least one of a shape information, a length information, a width information, a thickness information or a weight information of each of at least one part of the meat piece; and
the composition information comprises: at least one of a mass percentage, a lean meat rate or a fat rate of the entire meat piece, and at least one of a mass percentage, a lean meat rate or a fat rate of each of at least one part of the meat piece.

6. The method according to claim 1, wherein training the grading indicator parameter model comprises:
calculating a difference between the grading indicator parameter calculation value and the grading true value data, and training the grading indicator parameter model by comparing the difference with a corresponding reference data.

7. The method according to claim 6, wherein training the grading indicator parameter model further comprises:
when the difference is greater than the reference data, updating model parameters of the grading indicator parameter model to recalculate the grading indicator parameter calculation value, comparing the difference between the recalculated grading indicator parameter calculation value and the grading true value data with the reference data, and repeating calculation and comparison until the difference is less than or equal to the reference data.

8. The method according to claim 1, wherein calculating the grading indicator parameter calculation value comprises:
performing, by the grading indicator parameter model, image processing on the meat imaging information to segment the meat imaging information, and calculating, by the grading indicator parameter model, the grading indicator parameter calculation value based on the segmented meat imaging information.

9. The method according to claim 1, wherein calculating the grading indicator parameter calculation value comprises:
receiving, by the grading indicator parameter model, a meat imaging information which is segmented by image processing, and calculating, by the grading indicator parameter model, the grading indicator parameter calculation value based on the segmented meat imaging information.

10. The method according to any one of claims 8 to 9, wherein the image processing comprises at least one of image segmentation and positioning processing, image noise reduction processing, or image enhancement processing.

11. The method according to claim 1, further comprising:
training an image segmentation and positioning model using the meat imaging information and a part of the grading truth data, and providing a part of the grading indicator parameter calculation value based on the meat imaging information using an output of the trained image segmentation and positioning model.

12. The method according to claim 1, wherein the high-precision measurement comprises:
acquiring the grading truth data of the meat piece using a high-precision imaging device; and/or
segmenting the meat piece to acquire at least one part of the meat piece, and measuring the at least one part independently to acquire the grading truth data of the meat piece.

13. A meat grading system, configured to perform the meat grading method according to any one of claims 1 to 9, wherein the system comprises:
a meat imaging detection device configured to acquire the multi-dimensional meat imaging information of the meat piece;
a true value data acquisition device configured to acquire the grading true value data of the meat piece; and
the grading indicator parameter model configured to: calculate the grading indicator parameter calculation value based on the multi-dimensional meat imaging information, and be trained based on the grading indicator parameter calculation value and the grading true value data to acquire the trained grading indicator parameter model.

14. The meat grading system according to claim 13, wherein the trained grading indicator parameter model grades the meat piece based on the grading indicator parameter calculation value calculated by the trained grading indicator parameter model.

15. The meat grading system according to claim 13, further comprising an image segmentation and positioning model, wherein the image segmentation and positioning model is trained based on the meat imaging information and a part of the grading truth data, and an output provided by the trained image segmentation and positioning model based on the meat imaging information is used as a part of the grading indicator parameter calculation value.

16. The meat grading system according to any one of claims 13 to 15, wherein the grading true value data acquisition device comprises:
a manual measurement device configured to segment the meat piece and directly measure at least one segmented part to acquire the grading true value data; and/or
a high-precision imaging device configured to acquire a high-precision imaging information of the meat piece at a resolution higher than a resolution of the meat imaging detection device, so as to acquire the grading true value data therefrom.
